# EUROPÄISCHE PATENTANMELDUNG

(11) **EP 1 849 551 A2**
(43) Veröffentlichungstag der Anmeldung: **31.10.2007**
(21) Anmeldenummer: 07007830.8
(22) Anmeldetag: 17.04.2007
(51) Int. Cl.: B23K 20/08, B21D 39/04, B21D 26/08, B22F 3/08, B01J 3/00, C06B 45/00

(54) **Verfahren zum Bearbeiten von Werkstoffen, umfassend das Einbringen eines Sprengstoffes auf Basis von porösem Silizium auf bzw. in den Werkstoff**

(30) Priorität: 28.04.2006 DE 102006019856
(71) Anmelder: Admedes Schuessler GmbH, 75179 Pforzheim (DE)
(72) Erfinder: Schüssler, Andreas, 76327 Pfinztal (DE); Siekmeyer, Gerd, 79111 Freiburg (DE)
(74) Vertreter: Müller-Boré & Partner Patentanwälte

(57) **Zusammenfassung**

Die vorliegende Erfindung betrifft ein Verfahren zum Bearbeiten von Werkstoffen, welches das Auf- bzw. Einbringen eines Sprengstoffes auf Basis von porösem Silizium auf bzw. in den Werkstoff, das Zuführen mindestens eines Oxidationsmittels zu dem Sprengstoff, und das Zünden des Sprengstoffs durch Energiezufuhr umfasst, wobei durch die auftretende Explosion die Bearbeitung des Werkstoffes erfolgt. Das erfindungsgemäße Verfahren sieht nicht allein die Bearbeitung des Werkstoffes, sondern die direkte, (ultra)präzise Herstellung eines kompletten Bauteils in seiner finalen Geometrie vor. Durch das Bearbeiten wird der Werkstoff veredelt oder geformt, oder es wird ein Compoundmaterial bzw. ein Multilayermaterial gebildet. Dabei ist der Werkstoff aus Metall- und Metalliegierungswerkstoffen, Verbundwerkstoffen, Kunststoffwerkstoffen, Keramikwerkstoffen und Kombinationen davon ausgewählt, und der Sprengstoff ist poröses Silizium aus diskreten Teilchen mit einer Größenverteilung von d50 < 100 µm, welches Hohlräume im Größenbereich von 1 bis 1000 nm aufweist.

## Beschreibung

Die vorliegende Erfindung betrifft ein Verfahren zum Bearbeiten von Werkstoffen, welches das Auf- bzw. Einbringen eines Sprengstoffes auf Basis von porösem Silizium auf bzw. in den Werkstoff, das Zuführen mindestens eines Oxidationsmittels zu dem Sprengstoff, und das Zünden des Sprengstoffs durch Energiezufuhr umfasst, wobei durch die auftretende Explosion die Bearbeitung des Werkstoffes erfolgt. Das erfindungsgemäße Verfahren sieht nicht allein die Bearbeitung des Werkstoffes, sondern die direkte, (ultra)präzise Herstellung eines kompletten Bauteils in seiner finalen Geometrie vor. Durch das Bearbeiten wird der Werkstoff veredelt oder geformt, oder es wird ein Compoundmaterial bzw. ein Multilayermaterial gebildet. Dabei ist der Werkstoff aus Metall- und Metaillegierungswerkstoffen, Verbundwerkstoffen, Kunststoffwerkstoffen, Keramikwerkstoffen und Kombinationen davon ausgewählt, und der Sprengstoff ist poröses Silizium aus diskreten Teilchen mit einer Größenverteilung von d50 < 100 µm, welches Hohlräume im Größenbereich von 1 bis 1000 nm aufweist.

Bekannte Verfahren zum Bearbeiten von Werkstoffen schließen beispielsweise das Formen, das Fügen und das Veredeln ein. Beim Formen wird der Werkstoff durch Verfahren wie beispielsweise das Walzen oder Tiefziehen in eine gewünschte geometrische Form gebracht. Durch Fügetechniken wie das Nieten, Kleben oder Schweißen können Werkstoffe miteinander verbunden werden. Hierbei treten allerdings dann Probleme auf, wenn verschiedene Werkstoffe zu Compoundmaterialien verbunden werden sollen. Das Veredeln von Werkstoffen wird unter anderem angewendet, um innere Spannungen im Werkstück, die beispielsweise beim Gießen, Walzen, Schmieden oder Schweißen entstehen können, zu verringern. Dies kann beispielsweise durch Glühen erfolgen, wobei die innere Spannung im Werkstück durch plastisches Fließen bei der Glühtemperatur verringert wird.

Diese Verfahren können aber zu Materialfehlern in den Werkstoffen führen. So können Risse in den Werkstoffen auftreten oder das Material kann spröde werden

Eine Möglichkeit, diese Probleme zu vermeiden, besteht in dem Bearbeiten von Werkstoffen unter Verwendung von Spreng- bzw. Explosivstoffen. Beim Explosionsformen wird beispielsweise eine Sprengladung über dem zu bearbeitenden Werkstoff in einem Wasserbehälter angeordnet. Durch die Detonation der Sprengladung wird im Wasser eine starke Druckwelle erzeugt, die den Werkstoff umformt. Dieses Verfahren wird im Allgemeinen auf dünnwandige Bleche mit Durchmessern von zwei bis sechs Meter angewendet. So können auf diese Weise Fertigteile aus Titan oder Edelstahl mit einer Dicke von 10 bis 20 mm hergestellt werden. Als Sprengstoff wird üblicherweise TNT verwendet. Ein ähnliches Verfahren ist auch in T. Zheng et al., Material Letters 2000, 45, 133-137 offenbart.

Ferner werden Sprengstoffe auch in der Pulvermetallurgie zum Verdichten von Metallpulvern (Vorsintern) oder bei Festwerkstoffen zur Materialverdichtung verwendet. Diese Materialverdichtung erfolgt durch die bei der Explosion auftretenden Schockwelle und kann die Ermüdungseigenschaften der Werkstoffe erheblich verbessern, was zu einer Veredlung der Werkstoffe führt.

Ausserdem können Werkstoffe unter Verwendung von Sprengstoffen miteinander verbunden werden. So wird beim Explosionsschweißen ein Werkstoff durch Sprengstoff mit hoher Geschwindigkeit auf das andere Werkstück gepresst. Während des Verschweißprozesses entstehen in der Verbindungszone Drücke von mehreren GPa, sodass lokale plastische Verformung erfolgt. Ein Vorteil des Explosionsschwei-ßens liegt darin, dass auch unterschiedliche Materialien zu Compoundmaterialien verbunden werden können.

Ein Nachteil der bekannten Verfahren zur Bearbeitung von Werkstoffen unter Verwendung von Sprengstoffen liegt allerdings darin, dass lediglich Werkstücke mit großen Abmessungen in zufriedenstellender Weise bearbeitet werden können.

Gerade bei der Herstellung von Mikropräzisionsteilen wie medizinischen Geräten ist jedoch die Bearbeitung der Werkstoffe in äußerst genauer und definierter Weise von großer Wichtigkeit. Medizinische Implantate wie beispielsweise Stents werden häufig aus Nickel-Titan-Legierungen (Nitinol) hergestellt, da dieser Werkstoff eine hervorragende Biokompabilität sowie Pseudoelastizität aufweist. Präzisionsrohre aus Nitinol-Werkstoffen werden üblicherweise durch Laser-Tiefbohren von Nitinol-Schmelzbarren mit anschließenden Ziehprozessen erzeugt. Um ein gutes pseudoelastisches Verhalten zu erreichen, muss das Material teilweise auch kaltverformt werden. Dabei kommt es zu Materialaushärtungen, die durch entsprechende Zwischenglühschritte beseitigt werden müssen. Wenn das Material zu hart ist, kann es im Kaltziehprozess reißen. Ein generelles Problem bei der Verarbeitung solcher Werkstoffe liegt auch in der ermüdungsbedingten Mikrorissbildung, die zum Ermüdungsbruch des Werkstoffes führen kann.

Der vorliegenden Erfindung liegt daher die Aufgabe zugrunde, ein verbessertes Verfahren zum Bearbeiten bzw. (ultra)präzisen Formen von Werkstoffen unter Verwendung von Sprengstoffen bereitzustellen, welches auch für die Bearbeitung von Werkstücken mit kleinen, präzisen Abmessungen, insbesondere Mikropräzisionsteilen wie medizinischen Stents, geeignet ist. Dabei soll das Auftreten von Störungen in dem Werkstoff wie beispielsweise die Mikrorissbildung vermieden werden.

Diese Aufgabe wird durch die in den Ansprüchen gekennzeichneten Ausführungsformen gelöst.

Insbesondere wird ein Verfahren zum Bearbeiten von Werkstoffen bzw. Formen von Werkstoffen in ein komplettes Bauteil in seiner finalen Geometrie bereitgestellt, welches das Auf- bzw. Einbringen eines Sprengstoffes auf Basis von porösem Silizium auf bzw. in den zu bearbeitenden bzw. zu behandelnden Werkstoff, das Zuführen mindestens eines Oxidationsmittels zu dem Sprengstoff, und das Zünden des Sprengstoffs durch Energiezufuhr umfasst, wobei durch die auftretende Explosion die Bearbeitung des Werkstoffes erfolgt.

Wie bereits vorstehend erwähnt, sieht das erfindungsgemäße Verfahren nicht allein die Bearbeitung des Werkstoffes, sondern die direkte, (ultra)präzise Herstellung eines kompletten Bauteils in seiner finalen Geometrie vor. Das erfindungsgemäße Verfahren stellt insofern einen Ersatz der im Stand der Technik bekannten, üblichen Verbindungstechniken wie Schweißen, Löten oder Kleben bzw. Schmelztechniken mit anschließenden bekannten Verarbeitungstechnologien dar.

Der vorliegenden Erfindung liegt damit die überraschende Erkenntnis zugrunde, dass Sprengstoff auf Basis von spezifisch dimensioniertem Silizium vorteilhaft zum Bearbeiten von Werkstoffen bzw. zum Formen von Werkstoffen in ein komplettes Bauteil in seiner finalen Geometrie verwendet werden kann.

Die explosive Wirkung eines Sprengstoff auf Siliziumbasis beruht auf der Reaktion von porösem Silizium mit einem geeignete Oxidationsmittel. So wird in D. Kovalev et al., Physical Review Letters 2001, 87, 068301 beschrieben, dass poröses Silizium mit wasserstoffbedeckter Oberfläche explosiv reagiert, wenn es in flüssigen Sauerstoff eingetaucht wird bzw. wenn Sauerstoff aus der Umgebung in den Poren der porösen Siliziumprobe kondensiert. Dabei dienen die Wasserstoffatome auf der Oberfläche der Siliziumstruktur als Puffer- bzw. Sperrschicht, die den direkten Kontakt des Siliziums mit dem Oxidationsmittel Sauerstoff verhindert. Sobald diese Pufferschicht durch Energieeinwirkung aufgebrochen wird, liegen die Siliziumatome an der Oberfläche frei und können mit dem Sauerstoff in den Poren reagieren. Die hierbei freigesetzte Energie bewirkt unter anderem das weitere Entfernen von Wasserstoff von der Oberfläche der Siliziumstruktur und damit weitere freigelegte Siliziumatome, die mit Sauerstoff reagieren können. Die dadurch entstehende Kettenreaktion bewirkt die explosive Wirkung.

Bei Verwendung von flüssigem Sauerstoff als Oxidationsmittel erfolgt die Reaktion allerdings spontan bei Temperaturen von 4,2 bis etwa 90 K, was dieses reaktive System in der Praxis nicht handhabbar macht. Durch Verwendung anderer Oxidationsmittel als flüssiger Sauerstoff konnte dieses Problem jedoch gelöst werden. In DE 102 04 895 A1 ist beispielsweise ein handhabbarer Sprengstoff auf Basis von porösem Silizium offenbart, bei dem Brennstoff und Oxidationsmittel räumlich voneinander getrennt stabil vorliegen und durch Energieeinwirkung gezielt zur explosiven Reaktion gebracht werden können. Als Oxidationsmittel werden beispielsweise Ammonium- und Metallnitrate und -perchlorate, Wasserstoffperoxid, Hydrazin, Hydroxylamin und Hydrazinnitrat beschrieben. In DE 102 04 834 A1 und DE 10 2004 001 501 A1 wurde beispielsweise vorgeschlagen, einen derartigen Sprengstoff als Zündmittel in Airbagsystemen von Kraftfahrzeugen zu verwenden.

Die Herstellung des porösen Siliziums kann beispielsweise durch elektrochemisches Ätzen von kristallinem Silizium erfolgen. Dieses Verfahren ist im Stand der Technik bekannt und beispielsweise in DE 102 04 895 A1 beschrieben.

Im Rahmen der vorliegenden Erfindung besteht das als Sprengstoff verwendete poröse Silizium aus diskreten Teilchen mit einer Größenverteilung von d50 < 100 µm. Vorzugsweise weisen die Teilchen eine Größenverteilung von d50 < 50 µm auf. Die diskreten Siliziumteilchen liegen vorzugsweise in amorpher, teilkristalliner oder kristalliner Form vor und weisen ein schwammartiges Gerüst mit zahlreichen Poren bzw. Hohlräumen auf. Die Hohlräume liegen in einem Größenbereich von 1 bis 1000 nm, bevorzugt in einem Bereich von 2 bis 100 nm und noch mehr bevorzugt in einem Bereich von 2 bis 50 nm. Dadurch kann das poröse Silizium eine Oberfläche von bis zu 1000 m²/cm³ aufweisen, bevorzugt zwischen 200 und 1000 m²/cm³. Dies ist für das Ablaufen der Explosionsreaktion vorteilhaft, da ein direkter Zusammenhang zwischen der Porösität bzw. der Oberfläche des Siliziums und dessen Reaktivität besteht.

Der Sprengstoff wird in geeigneter Weise auf den zu bearbeitenden bzw. zu formenden Werkstoff aufgebracht oder in den Werkstoff eingebracht. Das Einbringen in den Werkstoff kann beispielsweise dann geeignet sein, wenn der Werkstoff in Röhrenform vorliegt.

Ferner wird mindestens ein Oxidationsmittel zu dem Sprengstoff zugeführt. Als Oxidationsmittel kann jedes Oxidationsmittel verwendet werden, welches geeignet ist, mit dem porösen Silizium unter kontrollierbaren Bedingungen explosionsartig zu reagieren. Entsprechende Oxidationsmittel sind im Stand der Technik beschrieben. Vorzugsweise ist das Oxidationsmittel aus der Gruppe, bestehend aus Ammonium- und Metallnitraten, -nitriten, -chloraten, -perchloraten, -bromaten, -iodaten, und -peroxiden, Wasserstoffperoxid, Schwefel, Hydrazin, Hydroxylamin, Hydrazinnitrat, Hydroxylammoniumnitrat und Kombinationen davon, ausgewählt.

Die Zündung des mit dem Oxidationsmittels versehenen Sprengstoffs erfolgt durch Energiezufuhr. Dazu ist jede Energiequelle verwendbar, die es ermöglicht, die Energie in kontrollierbarer Weise dem Sprengstoff zuzuführen und damit eine kontrollierte Explosion zu ermöglichen. Vorzugsweise erfolgt die Energiezufuhr durch Bestrahlung mit sichtbarem Licht oder infrarotem Licht, beispielsweise Laserbestrahlung, durch Induktion, durch elektrischen Impuls oder Entladung, durch Zuführen von Wärme, bespielsweise auch durch mechanische Reibung, oder durch chemische Reaktionen.

Durch das Zünden des Sprengstoffs auf Basis von porösem Silizium erfolgt eine Explosion, durch die der Werkstoff in der gewünschten Weise bearbeitet wird. Der verwendete Werkstoff ist aus der Gruppe, bestehend aus Metall- und Metalllegierungswerkstoffen, Verbundwerkstoffen, Kunststoffwerkstoffen und Keramikwerkstoffen und Kombinationen davon, ausgewählt: Im Rahmen der vorliegenden Erfindung sind Werkstoffe, die für die Herstellung von Mikropräzisionsteilen wie medizinische Geräte verwendet werden, bevorzugt. Dies sind besonders bevorzugt Werkstoffe auf Basis von Titan, Gold, Tantal, Platin, rostfreiem Edelstahl, Kobalt-Chrom-Tantal-Legierungen, Platin-Iridium-Legierungen, Nickel-Titan-Legierungen, insbesondere Nitinol, und Kombinationen davon.

Durch das Bearbeiten wird der Werkstoff veredelt oder in ein fertiges Bauteil mit finaler Geometrie geformt, oder es wird ein Compoundmaterial bzw. Multilayermaterial, d.h. sandwichartig aufgebaute Werkstoffe bzw. Materialien, aus zwei oder mehreren Werkstoffen gebildet.

In einer bevorzugen Ausführungsform liegt das Bearbeiten in der Veredlung des Werkstoffes, wobei der Sprengstoff in Form einer dünnen Schicht auf den Werkstoff aufgebracht wird. Die Dicke der Schicht liegt vorzugsweise in dem Bereich von 1 µm bis 1 mm, besonders bevorzugt in dem Bereich von 10 bis 100 µm.

So wird durch die temperaturgesteuerte Zündung des Sprengstoffs eine Schockwelle erzeugt, die beispielsweise zur Materialverdichtung bei dem zu bearbeitenden Werkstoff bewirkt. Auf diese Weise lassen sich unter anderem die Ermüdungseigenschaften von Metallen, beispielsweise von Titanwerkstoffen, erheblich verbessern.

Dabei kann der Sprengstoff direkt oder auf einer Trägerfolie angeordnet auf den Werkstoff aufgebracht werden. In einer bevorzugten Ausführungsform der Erfindung wird der Sprengstoff auf einer Trägerfolie angeordnet auf den Werkstoff aufgebracht. Diese Trägerfolie kann aus jedem geeigneten Material bestehen. Vorzugsweise jedoch besteht die Trägerfolie aus einem Polymermaterial oder aus Aluminium.

In einer anderen bevorzugten Ausführungsform liegt das Bearbeiten in der Formung von Pulver- oder Festwerkstoffen, wobei der Sprengstoff derart angeordnet wird, dass durch die Explosion des Sprengstoffes der Werkstoff in gewünschter Weise geformt wird, und zwar in der Regel in ein fertiges bzw. komplettes Bauteil mit finaler Geometrie.

Besonders bevorzugt ist dabei die Formung von Pulverwerkstoffen, wobei zunächst der Pulverwerkstoff in eine Verdichtungskammer eingebracht wird und dann der Sprengstoff derart in der Verdichtungskammer angeordnet wird, dass durch die Explosion der Werkstoff in der gewünschten Weise geformt bzw. verdichtet wird.

Dazu wird beispielsweise in einem Vorprozess durch Mischen von Nickel und Titan ein Pulverwerkstoff hergestellt oder Nitinol pulverisiert. Dabei weist das Pulver bevorzugt eine Korngröße von d50 < 100 µm auf. In einer Mischtrommel kann das Pulver beispielsweise durch Verdüsen oder andere mechanische oder chemische Verfahren vermischt und nach dem Mischprozess in eine Verdichtungskammer eingebracht werden. Diese Kammer ist vorzugsweise derart ausgelegt, dass sie dem Druck während der Explosion standhält. Dies können mehrere GPa über einen Zeitraum von etwa 500 ns sein. Der Kern der Kammer wird vorzugsweise durch eine Keramik oder ein Hartmetall, beispielsweise Wolframcarbid, gebildet. Um die Wärme während dieses Prozesses abzuführen, kann an der Außenseite der Kammer eine Wasserkühlung vorgesehen sein. Der Sprengstoff wird vorzugsweise über eine thermische Reaktion mittels Heizdraht oder Laser bei Temperaturen oberhalb von 200°C gezündet.

Durch dieses Verfahren ist die Bildung von Fertigteilen durch den während der Explosion auftretenden Plasmaimpuls möglich.

Das erfindungsgemäße Verfahren kann insofern auch zur lokalen bzw. selektiven Bearbeitung von Werkstoffen bzw. Gegenständen eingesetzt werden.

In einer bevorzugten Ausführungsform liegt das Bearbeiten des Werkstoffs in der Bildung eines Compoundmaterials, wobei mindestens zwei Werkstoffkomponenten derart aneinander angeordnet werden, dass diese durch die Explosion miteinander quasi "verschweißt" werden.

Durch das erfindungsgemäße Verfahren können Compoundmaterialien hergestellt werden, die aus Werkstoffschichten verschiedener Materialien bestehen und mit herkömmlichen Verfahren häufig nur schwierig herstellbar sind. Dies gilt im Rahmen der vorliegenden Erfindung auch für entsprechende Multilayermaterialien. So kann beispielsweise ein Werkstoffmaterial mittels dem erfindungsgemäßen Verfahren entsprechend beschichtet werden, d.h. zwei Werkstoffe werden entsprechend miteinander verbunden ("gebonded"), was quasi einem "Kaltschweißverfahren" gleichkommt.

Im Rahmen der vorliegenden Erfindung können die mindestens zwei Werkstoffkomponenten in Form von Rohren vorliegen, die ineinander gefügt werden, wobei üblicherweise das Innenrohr mit Wasser gefüllt wird und der Sprengstoff in die Mitte des inneren Rohres eingekapselt eingebracht und dann gezündet wird, so daß beide Rohre miteinander verschweißt werden. Besonders bevorzugt wird zunächst ein Tantalrohr in ein Nitinolrohr gefügt und durch Explosion verschweißt. Anschließend wird ein weiteres Nitinolrohr in das entstandene Compoundmaterial eingefügt und durch erneute Explosion des Sprengstoffes verschweißt. Auf diese Weise kann beispielsweise ein röhrenförmiges Nitinol-Tantal-Nitinol-Compoundmaterial hergestellt werden.

Bei diesem Verfahren bietet die Verwendung von porösem Silizium als Sprengstoff den wesentlichen Vorteil, dass nur kurzzeitig während der Explosion ein Druck von mehreren GPa erzeugt wird. Am Ende der Reaktion baut sich der Druck wieder komplett ab, d.h. der Prozess lässt sich sehr genau steuern und bewirkt nur die gewünschte Verbindung der Materialien. Herkömmliche Sprengstoffe bauen den Druck nach der Reaktion hingegen nicht sofort wieder ab, was zu einer Zerstörung der Werkstoffe führen kann.

Das auf diese Weise erhaltene Nitinol-Tantal-Nitinol-Compoundmaterial kann vorzugsweise in der Herstellung medizinischer Stents verwendet werden.

Die vorliegende Erfindung betrifft ferner die Verwendung von porösem Silizium aus diskreten Teilchen mit einer Größenverteilung von d50 < 100 µm und Hohlräumen im Größenbereich von 1 bis 1000 nm als Sprengstoff zum Bearbeiten von Werkstoffen, wobei der Werkstoff aus Metall- und Metalllegierungswerkstoffen, Verbundwerkstoffen, Kunststoffwerkstoffen, Keramikwerkstoffen und Kombinationen davon ausgewählt ist, und wobei der Werkstoff durch das Bearbeiten veredelt oder in ein fertiges Bauteil in seiner finalen Geometrie geformt wird, oder durch das Bearbeiten ein Compoundmaterial bzw. Multilayermaterial gebildet wird. Im Rahmen dieser erfindungsgemäßen Verwendung ist eingeschlossen, daß das vorstehende, spezifisch dimensionierte Silizium zur Zündung eines zweiten stabilen Explosivmaterials eingesetzt wird, wodurch sich beispielsweise ein Supersonic-Impuls einfacher generieren läßt, der dann wiederum zur entsprechenden, vorstehend ausgeführten Werkstoffbearbeitung genutzt werden kann.

Vorzugsweise kann die vorliegende Erfindung zum Herstellen eines röhrenförmigen Nitinol-Tantal-Nitinol-Compoundmaterials verwendet werden. Insbesondere kann die vorliegende Erfindung in der Herstellung von Mikropräzisionsteilen verwendet werden, wobei die Mikropräzisionsteile besonders bevorzugt medizinische Stents sind.

## Patentansprüche

1. Verfahren zum Bearbeiten von Werkstoffen bzw. Formen von Werkstoffen in ein komplettes Bauteil in seiner finalen Geometrie, welches die Schritte umfasst:
a) das Auf- bzw. Einbringen eines Sprengstoffes auf Basis von porösem Silizium auf bzw. in den Werkstoff,
wobei der Werkstoff aus Metall- und Metalllegierungswerkstoffen, Verbundwerkstoffen, Kunststoffwerkstoffen, Keramikwerkstoffen und Kombinationen davon ausgewählt ist, und
wobei der Sprengstoff poröses Silizium aus diskreten Teilchen mit einer Größenverteilung von d50 < 100 µm ist und Hohlräume im Größenbereich von 1 bis 1000 nm aufweist,
b) das Zuführen mindestens eines Oxidationsmittels zu dem Sprengstoff, und
c) das Zünden des Sprengstoffs durch Energiezufuhr, wobei durch die auftretende Explosion die Bearbeitung des Werkstoffes erfolgt,
wobei der Werkstoff durch das Bearbeiten veredelt oder geformt wird, oder durch das Bearbeiten ein Compoundmaterial bzw. ein Multilayermaterial gebildet wird.

2. Verfahren nach Anspruch 1, wobei das Oxidationsmittel aus der Gruppe, bestehend aus Ammonium- und Metallnitraten, -nitriten, -chloraten, - perchloraten, -bromaten, -iodaten, und -peroxiden, Wasserstoffperoxid, Schwefel, Hydrazin, Hydroxylamin, Hydrazinnitrat, Hydroxylammoniumnitrat und Kombinationen davon, ausgewählt ist.

3. Verfahren nach Anspruch 1 oder 2, wobei die Energiezufuhr durch Bestrahlung mit sichtbarem Licht oder infrarotem Licht, beispielsweise Laserbestrahlung, durch Induktion, durch elektrischen Impuls oder Entladung, durch Zuführen von Wärme, bespielsweise auch durch mechanische Reibung, oder durch chemische Reaktionen erfolgt.

4. Verfahren nach einem der Ansprüche 1 bis 3, wobei der Werkstoff aus der Gruppe, bestehend aus Titan, Gold, Tantal, Platin, rostfreiem Edelstahl, Kobalt-Chrom-Tantal-Legierungen, Platin-Iridium-Legierungen, Nickel-Titan-Legierungen, insbesondere Nitinol, und Kombinationen davon, ausgewählt ist.

5. Verfahren nach einem der Ansprüche 1 bis 4, wobei das Bearbeiten in der Veredlung des Werkstoffes liegt, wobei in Schritt a) der Sprengstoff in Form einer dünnen Schicht auf den Werkstoff aufgebracht wird.

6. Verfahren nach Anspruch 5, wobei die Dicke der in Schritt a) aufgebrachten Sprengstoffschicht in dem Bereich von 1 µm bis 1 mm liegt.

7. Verfahren nach Anspruch 5, wobei die Sprengstoffschicht angeordnet auf einer Trägerfolie auf den Werkstoff aufgebracht wird.

8. Verfahren nach Anspruch 7, wobei die Trägerfolie aus einem Polymermaterial oder aus Aluminium besteht.

9. Verfahren nach einem der Ansprüche 1 bis 4, wobei das Bearbeiten in der Formung von Pulver- oder Festwerkstoffen liegt, wobei in Schritt a) der Sprengstoff derart angeordnet wird, dass durch die in Schritt c) erfolgende Explosion des Sprengstoffes der Werkstoff in gewünschter Weise geformt wird.

10. Verfahren nach Anspruch 9, wobei das Bearbeiten in der Formung von Pulverwerkstoffen liegt, wobei in Schritt a) zunächst der Pulverwerkstoff in eine Verdichtungskammer eingebracht wird und dann der Sprengstoff derart in der Verdichtungskammer angeordnet wird, dass durch die in Schritt c) erfolgende Explosion des Sprengstoffes der Werkstoff in gewünschter Weise geformt wird.

11. Verfahren nach einem der Ansprüche 1 bis 4, wobei das Bearbeiten in der Bildung eines Compoundmaterials liegt, wobei in Schritt a) mindestens zwei Werkstoffkomponenten derart aneinander angeordnet werden, dass diese durch die in Schritt c) erfolgende Explosion miteinander verschweißt werden.

12. Verfahren nach Anspruch 11, wobei die mindestens zwei Werkstoffkomponenten in Form von Rohren vorliegen, die ineinander gefügt werden, und wobei der Sprengstoff in die Mitte des inneren Rohres eingebracht wird.

13. Verfahren nach Anspruch 12, wobei zunächst ein Tantalrohr in ein Nitinolrohr gefügt und durch Explosion des Sprengstoffes verschweisst wird und anschließend ein weiteres Nitinolrohr in das entstandene Compoundmaterial eingefügt und durch erneute Explosion des Sprengstoffes verschweisst wird, wodurch ein röhrenförmiges Nitinol-Tantal-Nitinol-Compoundmaterial hergestellt wird.

14. Verwendung von porösem Silizium aus diskreten Teilchen mit einer Größenverteilung von d50 < 100 µm und Hohlräumen im Größenbereich von 1 bis 1000 nm als Sprengstoff zum Bearbeiten von Werkstoffen,
wobei der Werkstoff aus einem Metall, einer Metalllegierung und/oder einer Keramik ausgewählt ist, und
wobei der Werkstoff durch das Bearbeiten veredelt oder in ein fertiges Bauteil in seiner finalen Geometrie geformt wird, oder durch das Bearbeiten ein Compoundmaterial bzw. Multilayermaterial gebildet wird.

15. Verwendung nach Anspruch 14 zum Herstellen eines röhrenförmigen Nitinol-Tantal-Nitinol-Compoundmaterials.

16. Verwendung nach Anspruch 14 oder 15 in der Herstellung von Mikropräzisionsteilen.

17. Verwendung nach Anspruch 16, wobei die Mikropräzisionsteile medizinische Stents sind.
